# EUROPEAN PATENT APPLICATION

(11) **EP 4 772 698 A1**
(43) Date of publication of application: **08.07.2026**
(21) Application number: 25846925.3
(22) Date of filing: 02.07.2025
(51) Int. Cl.: E02D 17/20, E02D 3/00, A01G 9/02

(54) **SLOPE RESTORATION DEVICE AND METHOD FOR DESERTIFICATION CONTROL**

(30) Priority: 31.07.2024 CN 202411039465
(71) Applicant: SHANGHAI INVESTIGATION, DESIGN & RESEARCH INSTITUTE CO., LTD., Shanghai 200434 (CN)
(72) Inventor: ZHAI, Baohua, Shanghai 200434 (CN); CAI, Lijing, Shanghai 200434 (CN); LIU, Zihan, Shanghai 200434 (CN); CHENG, Nanning, Shanghai 200434 (CN); JU, Zewen, Shanghai 200434 (CN); JIANG, Yue, Shanghai 200434 (CN); HUANG, Junjie, Shanghai 200434 (CN); SUI, Xuanhong, Shanghai 200434 (CN)
(74) Representative: Groth & Co. KB
(86) International application number: PCT/CN2025/106668
(87) International publication number: WO 2026/026479

(57) **Abstract**

The present application provides a slope restoration device and method for desertification control. The slope restoration device is arranged on a slope and comprises a sand barrier assembly and a water collection and soil moisture conservation assembly, wherein the sand barrier assembly is configured to reduce wind speed, block wind-blown sand, reduce runoff velocity during rainfall and reduce soil and water loss on the slope surface of the slope; the water collection and soil moisture conservation assembly is configured to store rainwater, and under the action of light, water stored in the water collection and soil moisture conservation assembly can evaporate upward to increase the humidity of the slope and promote vegetation coverage and greening of the slope. The present application is suitable for ecological restoration of sandy slopes in arid and water-scarce areas, and can effectively collect rainwater, especially rainstorm runoff, with remarkable effects in soil and water conservation and reducing runoff erosion. Meanwhile, it can block wind-blown sand to provide conditions for vegetation restoration and improve the survival rate of vegetation restoration. The main materials adopted in the present application are degradable with high environmental friendliness; the device can be mass-produced with high promotion potential and simple construction. By means of surface microtopographic modification, the present application can be popularized and applied to gentle semi-fixed and fixed sandy lands.

## Description

### CROSS-REFERENCE TO RELATED APPLICATIONS

The present application claims priority of the Chinese patent application No. 202411039465.8 filed on July 31, 2024 to the CNIPA, and entitled "Slope Restoration Device and Method for Desertification Control", the entire content of which is incorporated herein by reference.

### TECHNICAL FIELD

The present application relates to the technical fields of desertification control, soil and water conservation and afforestation, and in particular, to a slope restoration device and method for desertification control.

### BACKGROUND ART

Desertification poses an increasingly serious threat to the earth and human beings, and has become one of the most important and urgent environmental problems to be solved worldwide in recent years.

In the prior art, the ecological restoration technology combining engineering measures and biological measures is the key technology for desertification control, and the survival of vegetation is the key factor affecting the effectiveness of control in this technology.

The survival of vegetation mainly depends on water acquisition in the initial stage of cultivation, and vegetation has strong drought resistance after taking root and sprouting. Therefore, the key to ensuring the survival rate of vegetation is water acquisition in the initial stage of vegetation cultivation.

In desertification treatment, the efficient utilization of water resources, reduction of wind speed and blocking of wind-blown sand are the core factors and main difficulties for vegetation restoration in desertified areas.

Therefore, it is necessary to design a slope restoration device and method for desertification control to carry out soil and water conservation and sand fixation and greening on slopes in desertified areas.

### SUMMARY OF THE INVENTION

In view of the above shortcomings of the prior art, an objective of the present application is to provide a slope restoration device and method for desertification control, which can improve the utilization rate of natural precipitation in arid areas by effectively collecting water resources and slowing down the loss of water resources, enhance the effectiveness of vegetation restoration, and solve the problem of serious water resource loss and low vegetation survival rate of desertified slopes in the prior art.

To achieve the above objective and other related objectives, the present application provides a slope restoration device for desertification control, arranged on a slope; the device comprises a sand barrier assembly and a water collection and soil moisture conservation assembly, wherein the sand barrier assembly is configured to reduce wind speed, block wind-blown sand, reduce runoff velocity during rainfall and reduce soil and water loss on the slope surface of the slope; the water collection and soil moisture conservation assembly is configured to store rainwater, and under the action of light, water stored in the water collection and soil moisture conservation assembly can evaporate upward to increase the humidity of the slope.

Optionally, the water collection and soil moisture conservation assembly comprises a framework, an outer cladding layer and an anti-seepage mat; the outer cladding layer is wrapped on an outer peripheral surface of the framework, and the framework and the outer cladding layer form a spiral tubular structure; the anti-seepage mat is arranged on a lower side of the framework.

Optionally, the framework is made of high-carbon helical steel wire.

Optionally, the outer cladding layer is made of geotextile; the geotextile used for making the outer cladding layer is a degradable natural eco-friendly geotextile.

Optionally, the anti-seepage mat comprises a double-layer cloth and water-repellent powder, and the water-repellent powder is filled between layers of the double-layer cloth.

Optionally, the sand barrier assembly is a living sand barrier, the water collection and soil moisture conservation assembly is buried on the slope, and the living sand barrier is laid on an upper side of the water collection and soil moisture conservation assembly.

Optionally, the sand barrier assembly is a combination of a mechanical sand barrier and sown/cut drought-tolerant vegetation, the water collection and soil moisture conservation assembly is buried on the slope, the mechanical sand barrier is arranged on a downstream side of the water collection and soil moisture conservation assembly, and the sown/cut drought-tolerant vegetation is planted on an upper side of the water collection and soil moisture conservation assembly.

To achieve the above objective or other objectives, the present application also discloses a slope restoration method for desertification control, using the above slope restoration device for desertification control, wherein the sand barrier assembly is a living sand barrier; the method comprises the following steps:
S1: Digging trenches along lines parallel to the contour lines of the slope and burying the water collection and soil moisture conservation assembly into the trenches;
S2: Backfilling a small amount of undisturbed sandy soil on an upper side of the water collection and soil moisture conservation assembly, and laying the living sand barrier into the small amount of undisturbed sandy soil; wherein the living sand barrier not only reduces wind speed and blocks wind-blown sand, but also reduces runoff velocity during rainfall and reduces soil and water loss on the slope surface;
S3: During rainfall, the water collection and soil moisture conservation assembly stores rainwater; and under the action of light after rainfall, water stored in the water collection and soil moisture conservation assembly evaporates upward to increase the humidity of the area where the living sand barrier is located and improve the survival rate of the living sand barrier.

To achieve the above objective or other objectives, the present application also discloses a slope restoration method for desertification control, using the above slope restoration device for desertification control, wherein the sand barrier assembly is a combination of a mechanical sand barrier and sown/cut drought-tolerant vegetation; the method comprises the following steps:
A1: Laying the mechanical sand barrier along lines parallel to the contour lines of the slope; wherein the mechanical sand barrier not only reduces wind speed and blocks wind-blown sand, but also reduces runoff velocity during rainfall and reduces soil and water loss on the slope surface;
A2: Burying the water collection and soil moisture conservation assembly on an upstream side of the mechanical sand barrier;
A3: Backfilling a small amount of undisturbed sandy soil on an upper side of the water collection and soil moisture conservation assembly, and planting the drought-tolerant vegetation into the small amount of undisturbed sandy soil by sowing/cuttings;
A4: During rainfall, the water collection and soil moisture conservation assembly stores rainwater; and under the action of light after rainfall, water stored in the water collection and soil moisture conservation assembly evaporates upward to increase the humidity of the area where the drought-tolerant vegetation is located and promote the rooting and survival of the drought-tolerant vegetation.

Optionally, the burying mode of the water collection and soil moisture conservation assembly in the step A2 includes digging trenches and laying along lines parallel to the contour lines of the slope, or spot laying along the contour lines of the slope.

As mentioned above, the slope restoration device and method for desertification control involved in the present application have the following beneficial effects:
1. The slope restoration device and method for desertification control involved in the present application are suitable for ecological restoration of sandy slopes in arid and water-scarce areas.
2. The slope restoration device and method for desertification control involved in the present application can effectively collect rainwater, especially rainstorm runoff.
3. The slope restoration device and method for desertification control involved in the present application have remarkable effects in soil and water conservation and reducing runoff erosion; meanwhile, they can block wind-blown sand to provide conditions for vegetation restoration.
4. The slope restoration device and method for desertification control involved in the present application can improve the survival rate of vegetation restoration.
5. The slope restoration device and method for desertification control involved in the present application use degradable main materials and feature high environmental friendliness.
6. The slope restoration device and method for desertification control involved in the present application can be mass-produced with high promotion potential and simple construction.
7. The slope restoration device and method for desertification control involved in the present application can be popularized and applied to gentle semi-fixed and fixed sandy lands by means of surface microtopographic modification.

### BRIEF DESCRIPTION OF THE DRAWINGS

FIG. 1 is a plan view of the present application (the sand barrier assembly is a living sand barrier);
FIG. 2 is a sectional view of FIG. 1;
FIG. 3 is a plan view of the present application (the sand barrier assembly is a combination of a mechanical sand barrier and sown/cut drought-tolerant vegetation);
FIG. 4 is a sectional view of FIG. 3;
FIG. 5 is a schematic view of the slope restoration device for desertification control involved in the present application in use (the sand barrier assembly is a combination of a mechanical sand barrier and sown/cut drought-tolerant vegetation);
FIG. 6 is a structural schematic view of the water collection and soil moisture conservation assembly of the present application;
FIG. 7 is a structural schematic view of the anti-seepage mat in the water collection and soil moisture conservation assembly of the present application.

### Reference signs:

1, water collection and soil moisture conservation assembly; 101, framework; 102, outer cladding layer; 103, anti-seepage mat; 1031, double-layer cloth; 1032, water-repellent powder; 2, living sand barrier; 3, mechanical sand barrier; 4, contour line of the slope; 5, slope; 6, drought-tolerant vegetation.

### DETAILED DESCRIPTION OF THE EMBODIMENTS

The implementation ways of the present application are illustrated by specific embodiments below, and those skilled in the art can easily understand other advantages and effects of the present application from the content disclosed in this specification.

It should be noted that the structures, proportions, sizes, etc. shown in the drawings attached to this specification are only used to match the content disclosed in the specification for the understanding and reading of those skilled in the art, and are not used to limit the applicable conditions of the present application, so they have no substantial technical significance. Any modification of structure, change of proportional relationship or adjustment of size shall still fall within the scope of the technical content disclosed in the present application without affecting the effects and objectives that can be achieved by the present application. Meanwhile, the terms such as "upper", "lower", "left", "right", "middle" and "one" cited in this specification are only for the convenience of description and are not used to limit the applicable scope of the present application, and any change or adjustment of their relative relationship shall also be regarded as within the applicable scope of the present application without substantial change of the technical content.

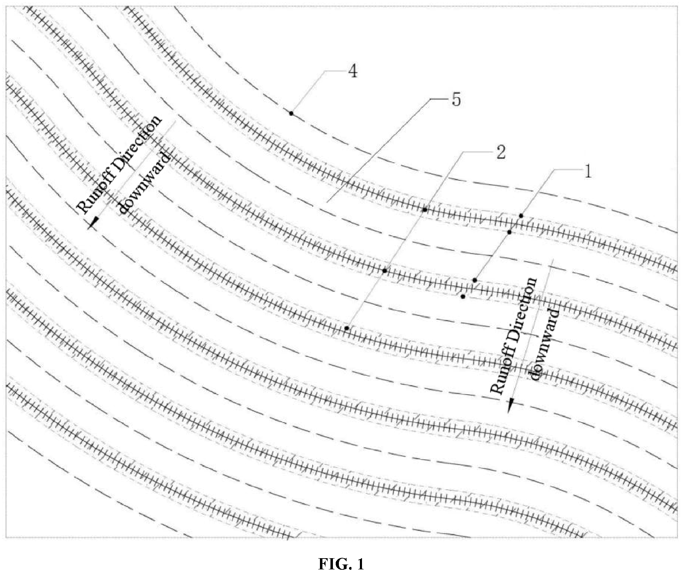

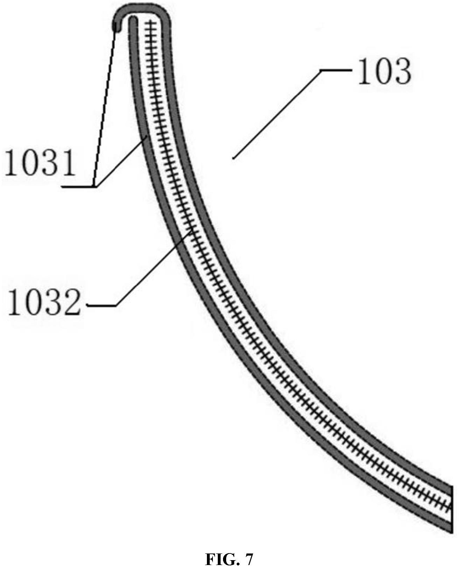

As shown in FIGS. 1 to 7, the present application provides a slope restoration device for desertification control, arranged on a slope 5; the device comprises a sand barrier assembly and a water collection and soil moisture conservation assembly 1, wherein the sand barrier assembly is configured to reduce wind speed, block wind-blown sand, reduce runoff velocity during rainfall and reduce soil and water loss on the slope surface of the slope 5; the water collection and soil moisture conservation assembly 1 is configured to store rainwater, and under the action of light, water stored in the water collection and soil moisture conservation assembly 1 can evaporate upward to increase the humidity of the slope 5.

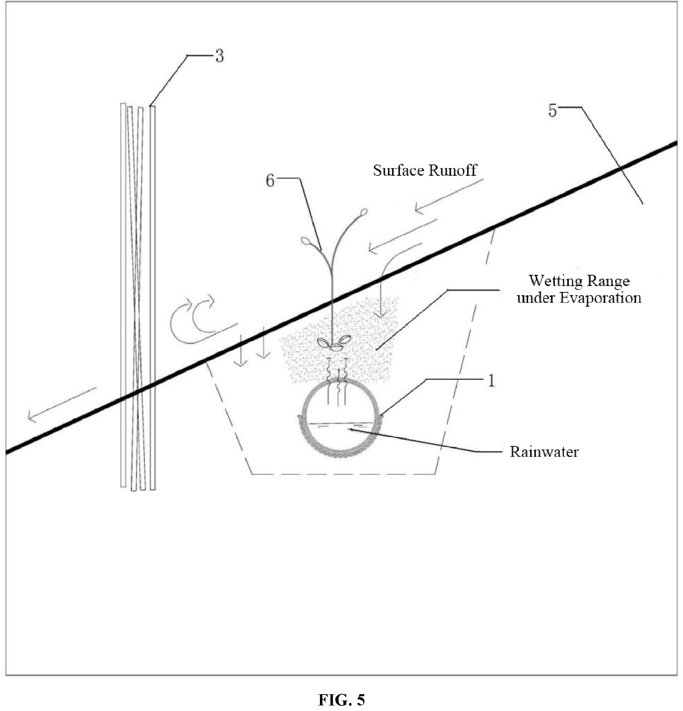

Optionally, as shown in FIGS. 5 to 7, the water collection and soil moisture conservation assembly 1 comprises a framework 101, an outer cladding layer 102 and an anti-seepage mat 103; the outer cladding layer 102 is wrapped on an outer peripheral surface of the framework 101, and the framework 101 and the outer cladding layer 102 form a spiral tubular structure; the anti-seepage mat 103 is arranged on a lower side of the framework 101. In the present embodiment, the outer cladding layer 102 is wrapped on the outer peripheral surface of the framework 101 by 360°, the anti-seepage mat 103 is arranged on the lower side of the framework 101 by 180°, and the height of the anti-seepage mat 103 is not less than the radius of the framework 101, that is, a water storage height of the water collection and soil moisture conservation assembly 1 reaches at least a height equal to the radius of the framework 101.

Optionally, in this embodiment, the framework 101 is made of high-carbon helical steel wire. Further, the framework 101 has been subjected to phosphoric acid anti-rust treatment and mainly bears the pressure of the backfilled soil on the upper side thereof.

Optionally, in this embodiment, the outer cladding layer 102 is made of geotextile. Further, the geotextile used for making the outer cladding layer 102 is a degradable natural eco-friendly geotextile. When the living sand barrier 2 or the drought-tolerant vegetation 6 takes root and sprouts on the slope 5, the dependence thereof on the water collection and soil moisture conservation assembly 1 will gradually decrease, while the geotextile will decompose gradually with good environmental protection effect.

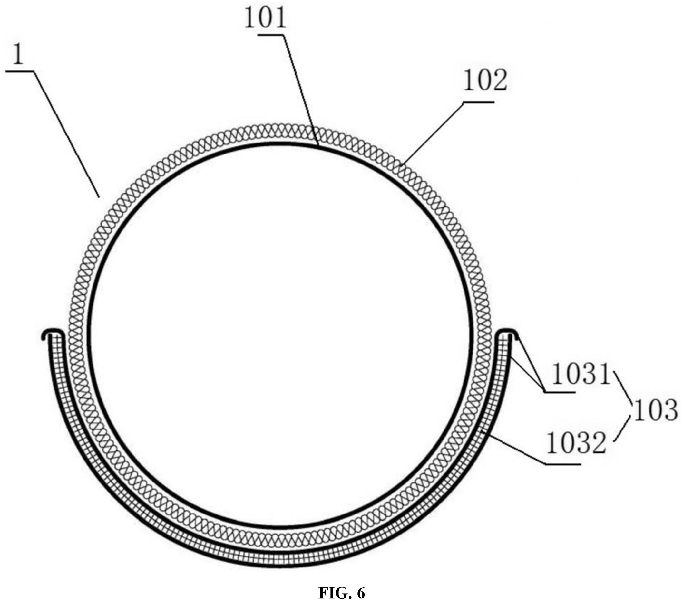

Optionally, as shown in FIGS. 6 to 7, in this embodiment, the anti-seepage mat 103 comprises a double-layer cloth 1031 and water-repellent powder 1032, and the water-repellent powder 1032 is filled between layers of the double-layer cloth 1031. Further, the double-layer cloth 1031 is also made of a degradable natural eco-friendly geotextile.

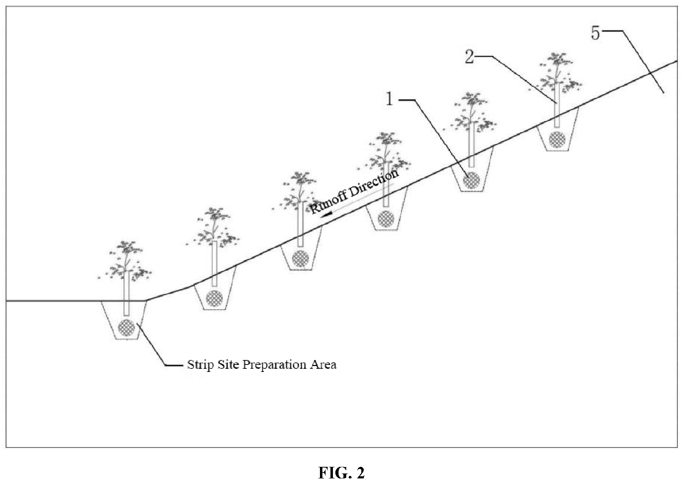

Optionally, as shown in FIGS. 1 and 2, the sand barrier assembly is a living sand barrier 2, the water collection and soil moisture conservation assembly 1 is buried on the slope 5, and the living sand barrier 2 is laid on an upper side of the water collection and soil moisture conservation assembly 1. In this embodiment, the living sand barrier 2 is plant branches with a potential of germination and survival.

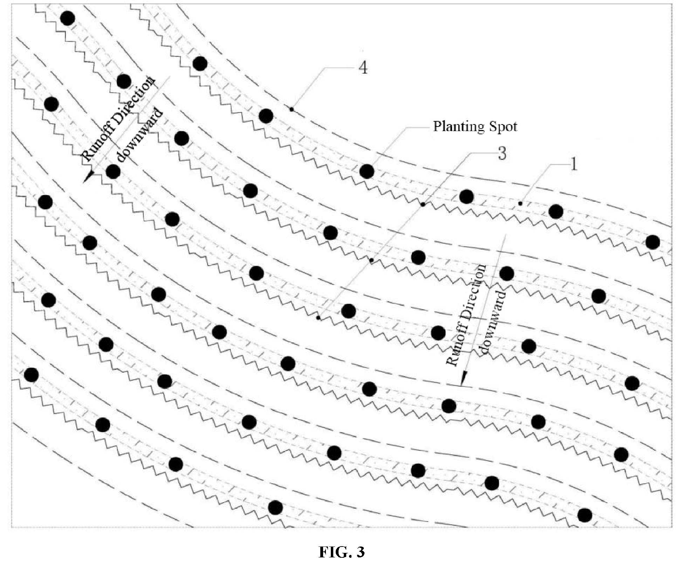

Optionally, as shown in FIGS. 3, 4 and 5, the sand barrier assembly is a combination of a mechanical sand barrier 3 and sown/cut drought-tolerant vegetation 6, the water collection and soil moisture conservation assembly 1 is buried on the slope 5, the mechanical sand barrier 3 is arranged on a downstream side of the water collection and soil moisture conservation assembly 1, and the sown/cut drought-tolerant vegetation 6 is planted on an upper side of the water collection and soil moisture conservation assembly 1. In this embodiment, the mechanical sand barrier 3 is a sand barrier without the potential of germination and survival. The mechanical sand barrier 3 has more types, such as branch sand barriers, straw sand barriers and the like.

To achieve the above objective or other objectives, the present application also discloses a slope restoration method for desertification control, using the above slope restoration device for desertification control, wherein the sand barrier assembly is a living sand barrier 2; as shown in FIGS. 1 and 2, the method comprises the following steps:
S1: Digging trenches along lines parallel to the contour lines 4 of the slope and burying the water collection and soil moisture conservation assembly 1 that is strip-shaped into the trenches;
S2: Backfilling a small amount of undisturbed sandy soil on an upper side of the water collection and soil moisture conservation assembly 1, and laying the living sand barrier 2 into the small amount of undisturbed sandy soil; wherein the living sand barrier 2 not only reduces wind speed and blocks wind-blown sand, but also reduces runoff velocity during rainfall and reduces soil and water loss on the slope surface;
S3: As shown in FIG. 2, during rainfall, rainwater flows along the runoff direction of the slope 5; at this time, the living sand barrier 2 laid on the upper side of the water collection and soil moisture conservation assembly 1 blocks the runoff of rainwater to avoid the erosion of the slope 5 by high-velocity rainwater, and at the same time, the living sand barrier 2 blocks rainwater to make rainwater enter the water collection and soil moisture conservation assembly 1; rainwater infiltrates into the framework 101 through the outer cladding layer 102, and then is blocked by the anti-seepage mat 103 and stored upon the anti-seepage mat 103; the water collection and soil moisture conservation assembly 1 acts as a catchment ditch during rainfall;
S4: When light is present, the water stored upon the anti-seepage mat 103 evaporates upward with the rise of temperature, increasing the humidity of the root area of the living sand barrier 2 and achieving a good soil moisture conservation effect, thereby improving the survival rate of the living sand barrier 2;
S5: After the living sand barrier 2 takes root and sprouts, the dependence of the living sand barrier 2 on the water collection and soil moisture conservation assembly 1 will gradually decrease; the outer cladding layer 102 wrapped on the outer periphery of the framework 101 and the double-layer cloth 1031 of the anti-seepage mat 103 decompose gradually with good environmental protection performance.

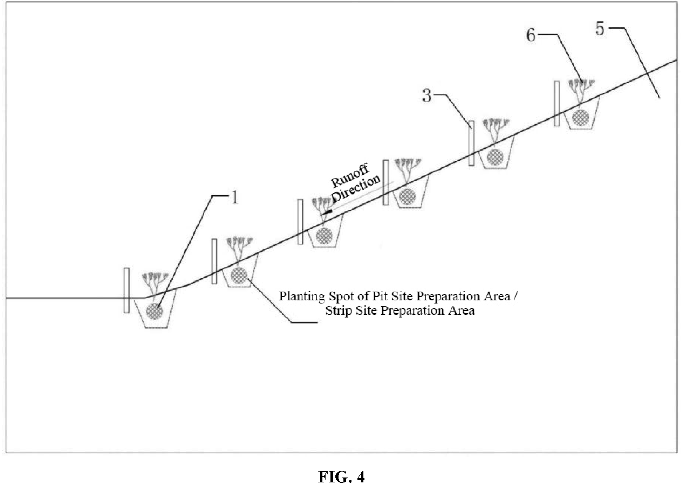

To achieve the above objective or other objectives, the present application also discloses a slope restoration method for desertification control, using the above slope restoration device for desertification control, wherein the sand barrier assembly is a combination of a mechanical sand barrier 3 and sown/cut drought-tolerant vegetation 6; as shown in FIGS. 3 to 5, the method comprises the following steps:
A1: Laying the mechanical sand barrier 3 along lines parallel to the contour lines 4 of the slope; the mechanical sand barrier 3 not only reduces wind speed and blocks wind-blown sand, but also reduces runoff velocity during rainfall and reduces soil and water loss on the slope surface;
A2: Burying the water collection and soil moisture conservation assembly 1 on the side of the mechanical sand barrier 3 close to the slope top (upstream side); the burying mode of the water collection and soil moisture conservation assembly 1 includes digging trenches and laying the water collection and soil moisture conservation assembly 1 that is strip-shaped along lines parallel to the contour lines 4 of the slope, or spot laying the water collection and soil moisture conservation assembly 1 that is spherical or blocky along the contour lines 4 of the slope;
A3: Backfilling a small amount of undisturbed sandy soil on an upper side of the water collection and soil moisture conservation assembly 1, and planting the drought-tolerant vegetation 6 into the small amount of undisturbed sandy soil by sowing/cuttings;
A4: As shown in FIGS. 4 and 5, during rainfall, rainwater flows along the runoff direction of the slope 5; at this time, the mechanical sand barrier 3 laid on the downstream side of the water collection and soil moisture conservation assembly 1 blocks rainwater to make rainwater enter the water collection and soil moisture conservation assembly 1; rainwater infiltrates into the framework 101 through the outer cladding layer 102, and then is blocked by the anti-seepage mat 103 and stored upon the anti-seepage mat 103; the water collection and soil moisture conservation assembly 1 acts as a catchment ditch during rainfall;
A5: As shown in FIG. 5, when light is present, the water stored upon the anti-seepage mat 103 evaporates upward with the rise of temperature, increasing the humidity of the area where the drought-tolerant vegetation 6 is located and achieving a good soil moisture conservation effect, thereby improving the survival rate of the drought-tolerant vegetation 6;
A6: After the drought-tolerant vegetation 6 takes root and sprouts, the dependence of the drought-tolerant vegetation 6 on the water collection and soil moisture conservation assembly 1 will gradually decrease; the outer cladding layer 102 wrapped on the outer periphery of the framework 101 and the double-layer cloth 1031 of the anti-seepage mat 103 decompose gradually with good environmental protection performance.

The slope restoration device and method for desertification control involved in the present application are suitable for ecological restoration of sandy slopes in arid and water-scarce areas, soil and water conservation of desertified slopes 5 in arid and semi-arid areas, and sand fixation and greening of bank slopes of trenches in semi-fixed deserts. The device and method can collect rainwater during rainfall, and the collected rainwater evaporates upward to provide water for the living sand barrier 2 or the drought-tolerant vegetation 6 in the presence of light irradiation, improving the survival rate of vegetation restoration. Further, the effects of soil and water conservation and reducing runoff erosion of the slope 5 are achieved by means of the living sand barrier 2, or by means of the mechanical sand barrier 3 and the drought-tolerant vegetation 6. The outer cladding layer 102 and the double-layer cloth 1031 in the water collection and soil moisture conservation assembly 1 of the present application are both made of degradable natural eco-friendly geotextile with high environmental friendliness; the water collection and soil moisture conservation assembly 1 can be mass-produced with high promotion potential and simple construction, and by only carrying out surface microtopographic modification, it can be popularized and applied to gentle semi-fixed and fixed sandy lands.

Therefore, the present application effectively overcomes various shortcomings in the prior art and has high industrial utilization value.

The above embodiments are only illustrative to explain the principle and effects of the present application, rather than limiting the present application. Anyone skilled in the art can modify or change the above embodiments without departing from the spirit and scope of the present application. Therefore, all equivalent modifications or changes made by those with ordinary knowledge in the technical field to which the present application pertains without departing from the spirit and technical concept disclosed in the present application shall still be covered by the claims of the present application.

## Claims

1. A slope restoration device for desertification control, arranged on a slope (5); **characterized by** comprising a sand barrier assembly and a water collection and soil moisture conservation assembly (1), wherein the sand barrier assembly is configured to reduce wind speed, block wind-blown sand, reduce runoff velocity during rainfall and reduce soil and water loss on the slope surface of the slope (5); the water collection and soil moisture conservation assembly (1) is configured to store rainwater, and under the action of light, water stored in the water collection and soil moisture conservation assembly (1) can evaporate upward to increase the humidity of the slope (5).

2. The slope restoration device for desertification control according to claim 1, **characterized in that** the water collection and soil moisture conservation assembly (1) comprises a framework (101), an outer cladding layer (102) and an anti-seepage mat (103); the outer cladding layer (102) is wrapped on an outer peripheral surface of the framework (101), and the framework (101) and the outer cladding layer (102) form a spiral tubular structure; the anti-seepage mat (103) is arranged on a lower side of the framework (101).

3. The slope restoration device for desertification control according to claim 2, **characterized in that** the framework (101) is made of high-carbon helical steel wire.

4. The slope restoration device for desertification control according to claim 2, **characterized in that** the outer cladding layer (102) is made of geotextile; the geotextile used for making the outer cladding layer (102) is a degradable natural eco-friendly geotextile.

5. The slope restoration device for desertification control according to claim 2, **characterized in that** the anti-seepage mat (103) comprises a double-layer cloth (1031) and water-repellent powder (1032), and the water-repellent powder (1032) is filled between layers of the double-layer cloth (1031).

6. The slope restoration device for desertification control according to claim 1, **characterized in that** the sand barrier assembly is a living sand barrier (2), the water collection and soil moisture conservation assembly (1) is buried on the slope (5), and the living sand barrier (2) is laid on an upper side of the water collection and soil moisture conservation assembly (1).

7. The slope restoration device for desertification control according to claim 1, **characterized in that** the sand barrier assembly is a combination of a mechanical sand barrier (3) and sown/cut drought-tolerant vegetation (6), the water collection and soil moisture conservation assembly (1) is buried on the slope (5), the mechanical sand barrier (3) is arranged on a downstream side of the water collection and soil moisture conservation assembly (1), and the sown/cut drought-tolerant vegetation (6) is planted on an upper side of the water collection and soil moisture conservation assembly (1).

8. A slope restoration method for desertification control, using the slope restoration device for desertification control according to any one of claims 1 to 5, wherein the sand barrier assembly is a living sand barrier (2); **characterized by** comprising the following steps:
S1: Digging trenches along lines parallel to the contour lines (4) of the slope and burying the water collection and soil moisture conservation assembly (1) into the trenches;
S2: Backfilling a small amount of undisturbed sandy soil on an upper side of the water collection and soil moisture conservation assembly (1), and laying the living sand barrier (2) into the small amount of undisturbed sandy soil; wherein the living sand barrier (2) not only reduces wind speed and blocks wind-blown sand, but also reduces runoff velocity during rainfall, reduces soil and water loss on the slope surface and increases the infiltration amount of runoff;
S3: During rainfall, the water collection and soil moisture conservation assembly (1) stores rainwater; and under the action of light after rainfall, water stored in the water collection and soil moisture conservation assembly (1) evaporates upward to increase the humidity of the area where the living sand barrier (2) is located and improve the survival rate of the living sand barrier (2).

9. A slope restoration method for desertification control, using the slope restoration device for desertification control according to any one of claims 1 to 5, wherein the sand barrier assembly is a combination of a mechanical sand barrier (3) and sown/cut drought-tolerant vegetation (6); **characterized by** comprising the following steps:
A1: Laying the mechanical sand barrier (3) along lines parallel to the contour lines (4) of the slope; wherein the mechanical sand barrier (3) not only reduces wind speed and blocks wind-blown sand, but also reduces runoff velocity during rainfall, reduces soil and water loss on the slope surface and increases the infiltration of runoff;
A2: Burying the water collection and soil moisture conservation assembly (1) on an upstream side of the mechanical sand barrier (3);
A3: Backfilling a small amount of undisturbed sandy soil on an upper side of the water collection and soil moisture conservation assembly (1), and planting the drought-tolerant vegetation (6) into the small amount of undisturbed sandy soil by sowing/cuttings;
A4: During rainfall, the water collection and soil moisture conservation assembly (1) stores rainwater; and under the action of light after rainfall, water stored in the water collection and soil moisture conservation assembly (1) evaporates upward to increase the humidity of the area where the drought-tolerant vegetation (6) is located and promote the rooting and survival of the drought-tolerant vegetation (6).

10. The slope restoration method for desertification control according to claim 9, **characterized in that** the burying mode of the water collection and soil moisture conservation assembly (1) in the step A2 includes digging trenches and laying along lines parallel to the contour lines (4) of the slope, or spot laying along the contour lines (4) of the slope.
